# EUROPÄISCHE PATENTANMELDUNG

(11) **EP 0 825 789 A2**
(43) Veröffentlichungstag der Anmeldung: **25.02.1998**
(21) Anmeldenummer: 97114215.3
(22) Anmeldetag: 18.08.1997
(51) Int. Cl.: H04Q 7/22, H04Q 7/30, H04Q 7/38

(54) **Verfahren zum Management von Nachrichtenkanälen zwischen einem Zubringernetz für mobile Kommunikationsendgeräte und einem Kommunikationssystem**

(30) Priorität: 20.08.1996 DE 19633548
(71) Anmelder: SIEMENS AKTIENGESELLSCHAFT, 80333 München (DE)
(72) Erfinder: Morper, Hans-Jochen, 85253 Erdweg (DE)

(57) **Zusammenfassung**

Bei einer Aktivität (a) eines mobilen Kommunikationsendgerätes (KE) wird zumindest einer von mehreren, ein Kommunikationssystem (LE) und ein Zubringernetzes (AN) verbindende Nachrichtenkanälen (N1..n) zugeteilt. Wird eine vorgegebene Anzahl von zugeteilten Nachrichtenkanälen (N1..n) überschritten, so werden diejenigen Kommunikationsendgeräte (KE abgefragt, denen zumindest ein Nachrichtenkanälen (N1..n) zugeteilt ist und deren gemessene Anzahl von Verbindungs-Aktivitäten (A) unter einer vorgegebenen Anzahl liegt. Bei abgefragten Deaktivierungen werden die jeweilen Nachrichtenkanäle (N1..n) freigegeben.

## Beschreibung

In zukünftigen Kommunikationsnetzen werden sowohl mobile bzw. drahtlose als auch drahtgebundene Kommunikationsendgeräte über Zubringernetze an ein Kommunikationssystem herangeführt. Das Zubringernetz ist durch verkehrskonzentrierende Vorfeldeinrichtungen und Kommunikationssystem-Anschlußeinrichtungen gebildet, die über Übertragungsstrecken bzw. Übertragungseinrichtungen verbunden sind. Die Kommunikationssystem-Anschlußeinrichtungen sind für den Anschluß an das Kommunikationssystem vorgesehen und passen die vom oder zum Kommunikationssystem übertragenen Nachrichten, bei mobilen Kommunikationsendgeräten insbesondere Sprachinformationen, an die physikalischen Eigenschaften und Protokolle des Zubringernetzes an. Hierzu sind zwischen der Kommunikationssystem-Anschlußeinrichtung und dem Kommunikationssystem mehrere Nachrichtenkanäle vorgesehen, über die die Nachrichten bzw. Sprachinformationen übertragen werden. Die Nachrichtenkanäle weisen meist eine Bandbreite von 64 kbit/s auf, über die jeweils digitalisierte Sprachinformationen bzw. mehrere komprimierte Sprachinformationen oder weitere dititale Informationen bzw. Daten übertragen werden. Üblicherweise sind mehrere Nachrichtenkanäle zu einem Nachrichtenstrom multiplext, beispielsweise 32 Nachrichtenkanäle zu einem Nachrichtenstrom mit einer Bandbreite von 2048 kbit/s.

Des weiteren sind den Zubringernetzen Basisstationen zugeordnet, an die drahtlos mobile Kommunikationsendgeräte angeschlossen sind. Der Anschluß erfolgt gemäß dem standardisierten drahtlosen DECT- oder CDMA-Übertragungsverfahren, das DECT-Verfahren beispielsweise gemäß dem ETSI-Standard 300-175 Teil 1 - 9. Hierbei wird bei einer Aktivierung eines mobilen Kommunikationsendgerätes zumindest ein Nachrichtenkanal für weitere Aktivitäten des mobilen Kommunikationsendgerätes zugeteilt; bei einer angeforderten Sprachverbindung durch ein mobiles Kommunikationsendgerät beispielsweise ein Nachrichtenkanal mit einer Bandbreite von 64 kbit/s und bei einer vorhergehenden Komprimierung beispielsweise 32 kbit/s. Eine Aktivierung von mobilen Kommunikationsendgeräten erfolgt durch Einschalten, wodurch in diesem gemäß dem DECT-Standard eine "location registration"-Meldung gebildet und über das Zubringernetz an das Kommunikationssystem übermittelt wird. Eine weitere Aktivierung, d.h. eine "location registration"-Meldung wird von dem jeweiligen Kommunikationsendgerät an eine weitere der ereichbaren Basistationen übermittelt - wird bei einem Wechsel des Kommunikationsendgerätes in einen anderen Bereich, im DECT-Standard als "local area" bezeichnet, bewirkt. Ist ein Übertragungskanal zwischen Kommunikationssystem-Anschlußeinrichtung und dem Kommunikationssystem zugeteilt, so können über diesen die Verbindungs-Aktivitäten der mobilen Kommunikationsendgeräte wie beispielsweise Verbindungsauf- und -abbau, weitere "local registration"-Prozeduren und Authentisierungsprozeduren abge-wickelt werden.

Nach einer vorhergehend erläuterten Aktivierung eines mobilen Kommunikationsendgerätes wird nun einer der Nachrichtenkänale zugeteilt und bleibt für ggf. weitere Verbindungs-Aktivitäten des Kommunikationsendgeräts zugeteilt. Wird beispielsweise nach einer auf- und wieder abgebauten Verbindung, beispielsweise nach einem Gespräch, das mobile Kommunikationsendgerät abgeschaltet, so bleibt der Übertragungskanal weiterhin zugeteilt, obwohl das mobile Kommunikationsendgerät nicht erreichbar ist und aktuell kein Verbindungsaufbau möglich ist. Dies bedeutet, daß Nachrichtenkanäle belegt bzw. übertragungs- und vermittlungstechnische Ressourcen des Zubringernetzes für eine Nutzung durch weitere Kommunikationsendgeräte nicht verfügbar sind.

Aus der DE 42 40 249 C1 ist bereits ein Verfahren zum Vermitteln von Nachrichtenkanälen zwischen einem lokalen Kommunikationssystem und Einrichtungen zur Realisierung von Punkkanälen bekannt, über das drahtlos Teilnehmeranschaltgeräte angeschlossen sind, die mit Kommunikationsendgeräten verbunden sind. Hierbei wird bei jeder Verbindungs-Aktivität des an die Teilnehmeranschaltgeräte drahtgebunden angeschlossenen Kommunikationsendgerätes ein Nachrichtenkanal zugeteilt und am Ende der Verbindungs-Aktivität wieder freigegeben.

Die der Erfindung zugrundeliegende Aufgabe besteht darin, das Management bzw. die Nutzung der vermittlungs- und übertragungstechnischen Ressourcen in einem Zubringernetz für mobile Kommunikationsendgeräte zu verbessern. Die Aufgabe wird durch die Merkmale des Anspruchs 1 gelöst.

Der wesentliche Aspekt des erfindungsgemäßen Verfahrens ist darin zu sehen, daß die Anzahl der Verbindungs-Aktivitäten derjenigen Kommunikationsendgeräte gemessen wird, für die zumindest ein Nachrichtenkanal zugeteilt ist und bei Überschreiten einer vorgegebenen Anzahl von zugeteilten Nachrichtenkanälen wird durch das Zubringernetz eine Zustandsabfrage derjenigen mobilen Kommunikationsendgeräte durchgeführt, bei denen die Anzahl der gemessenen Verbindungs-Aktivitäten innerhalb eines vorgegebenen Zeitraums eine vorgegebene Anzahl von Verbindungs-Aktivitäten unterschreitet. Bei einem Abfrageergebnis, das eine Deaktivierung des jeweiligen Kommunikationsendgerätes anzeigt, wird der jeweilige zumindest eine zugeteilte Nachrichtenkanal freigegeben. Dies bedeutet, daß bei einem Überlastfall, beispielsweise die zwischen dem Kommunikationssystem und dem Zubringernetz vorgesehene Nachrichtenkanäle sind zu 90% belegt, diejenigen mobilen Kommunikationsendgeräte durch eine Zustandsabfrage überprüft werden, denen bereits ein Nachrichtenkanal zugeteilt ist und die in einem vorgegebenen Zeitraum, d.h. in dem Zeitraum vor der Überprüfung, wenige Verbindungs-Aktivitäten, d.h. eine geringe Anzahl von Verbindungs-Aktivitäten durchgeführt haben.

Zeigt nun das Abfrageergebnis an, daß das jeweilige mobile Kommunikationsendgerät nicht aktiv, d.h. ausgeschaltet ist, so wird der zugeteilte Nachrichtenkanal freigegeben. Hierdurch kann ein aktueller, d.h. zeitlich begrenzter Überlastfall bezüglich der Anzahl der belegten bzw. zugeteilten Nachrichtenkanäle zwischen dem Kommunikationssystem und dem Zubringernetz vermieden, zumindest jedoch abgeschwächt werden.

Gemäß einer vorteilhaften Ausgestaltung des erfindungsgemäßen Verfahrens werden Schicht-3-Aktivitäten gemessen, d.h. bestimmte Meldungen in der Vermittlungsschicht - gemäß ISO-Referenzmodell ist die Vermittlungsschicht als Schicht 3 definiert - erfaßt und gemessen - Anspruch 2. Vorteilhaft werden hierbei durch ankommende und abgehende Anrufe an das bzw. vom jeweiligen mobilen Kommunikationsendgerät übermittelte Meldungen und/oder weiterzuleitende "location registration"-Meldungen und/oder Authentisierungs-Meldungen erfaßt und deren Anzahl gemessen - Anspruch 3. Die Verbindungs-Aktivitäten werden mit Hilfe von insbesondere programmtechnisch realisierten Zählern gezählt und für einen vorgegebenen Zeitraum wird ein die gemessene Anzahl von Verbindungs-Aktivitäten repräsentierender Zählwert gebildet und mit einem vorgegebenen, die vorgegebene Anzahl von Verbindungs-Aktivitäten repräsentierenden Vergleichs-Zählwert verglichen - Anspruch 4. Das Vergleichsergebnis zeigt eine das Überschreiten oder Unterschreiten der vorgegebenen Anzahl von Verbindungs-Aktivitäten an, wobei im Überlastfall bei einem Unterschreiten der diesem Kommunikationsendgerät zugeteilte Nachrichtenkanal freigegeben und bei einem Überschreiten der zugeteilte Nachrichtenkanal zugeteilt bzw. belegt bleibt. Die Zeitzählung und ein damit verbundenes Rücksetzen der gezählten Anzahl von Verbindungs-Aktivitäten bei Erreichen bzw. Überschreiten der vorgegebenen Zeiträume erfolgt mit Hilfe einer Zeitzähler-Aktualisierungsroutine - Anspruch 5.

Die Nachrichtenkanäle weisen vorteilhaft eine Bitrate von 64 kbit/s oder m x 64 kbit/s oder für die Übermittlung von insbesondere komprimierten Sprachinformationen eine Bitrate von 64 kbit/2ⁱ auf, wobei i 0,1..4 ist - Anspruch 6. Hierbei können mehrere Nachrichtenkanäle zu einem Nachrichtenstrom multiplext - beispielsweise 2048 kbit/s - zwischen dem Zubringernetz und dem Kommunikationssystem übertragen werden - Anspruch 7. Die Nachrichtenkanäle werden besonders vorteilhaft im Rahmen der standardisierten Schnittstelle V.5 realisiert - Anspruch 8. Über diese Schnittstelle werden sowohl die vom mobilen Kommunikationsendgerät als auch vom Kommunikationssystem übermittelten Signalisierungsinformationen und Nachrichten übermittelt.

Im folgenden wird die Erfindung anhand eines Blockschaltbildes und zweier Ablaufdiagramme näher erläutert. Dabei zeigen:
- FIG 1: in einem Blockschaltbild ein Zubringernetz mit mobilen Kommunikationsendgeräten und
- FIG 2: eine erfindungsgemäße Meßroutine
- FIG 3: eine erfindungsgemäße Überlastroutine und
- FIG 4: eine erfindungsgemäße Zeitzähler-Aktualisierungsroutine.

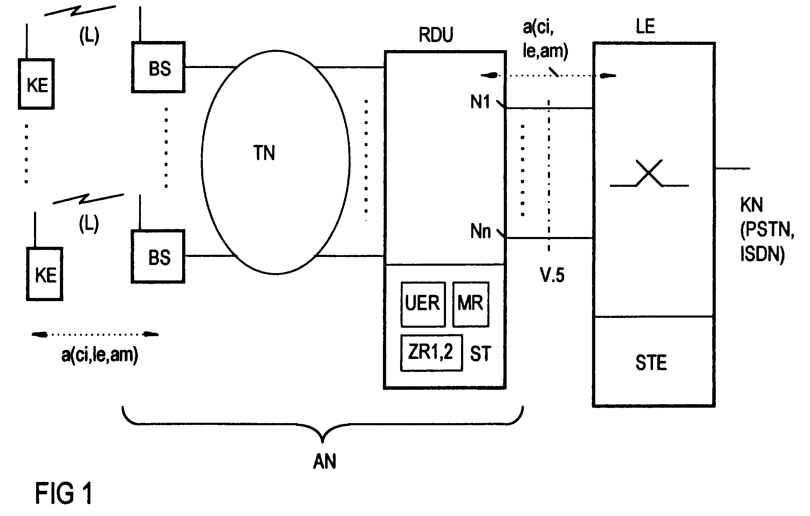

FIG 1 zeigt ein Zubringernetz AN, das durch eine Kommunikationssystem-Anschlußeinrichtung RDU, ein Übertragungsnetzwerk TN sowie Basisstationen BS gebildet ist, wobei das Übertragungsnetzwerk TN das Bindeglied zwischen den Basisstationen BS und der Kommunikationssystem-Anschlußeinrichtung RDU darstellt. Das Übertragungsnetzwerk TN kann durch optische oder drahtgebundene Übertragungsmedien einschließlich der zugehörigen Übertragungseinrichtungen - nicht dargestellt - realisiert sein. An die Basisstationen BS, beispielhaft sind zwei dargestellt, sind drahtlos mobile Kommunikationsendgeräte KE angeschlossen. Die Luftschnittstelle L zwischen den Basisstationen BS und den Kommunikationsendgeräten KE ist vorteilhaft gemäß dem standardisierten DECT- oder dem CDMA-Übertragungsverfahren realisiert.

Eine die Kommunikationssystem-Anschlußeinrichtung RDU überwachende und koordinierende Steuerung ST enthält eine programmtechnisch das erfindungsgemäße Verfahren realisierende Meß-, Überlast- und zwei Zähleraktualisierungsroutinen MR, UER, ZR1,2. Des weiteren ist die Konmunikationssystem-Anschlußeinrichtung RDU über n Nachrichtenkanäle N1..n mit einem Kommunikationssystem LE verbunden. Die Nachrichtenkanäle N1..n sind sowohl in der Komnunikationssystem-Anschlußeinrichtung RDU als auch im Kommunikationssystem LE im Rahmen der standardisierten Schnittstelle V.5 realisiert. Gemäß dieser V.5-Schnittstelle sind jeweils 30 Nachrichtenkanäle N zu einem multiplexten Nachrichtenstrom von beispielsweise 2048 kbit/s multiplext. In Fig. 1 sind lediglich die für die Erläuterung des erfindungsgemäßen Verfahrens erforderlichen Nachrichtenkanäle N1..n dargestellt.

Das Kommunikationssystem LE ist für die Vermittlung der Verbindungsanforderungen der mobilen Kommunikationsendgeräte KE oder zu Kommunikationsendgeräten eines weiteren Kommunikationsnetzes KN vorgesehen. Dieses Kommunikationsnetz KN stellt beispielsweise ein öffentliches Telefonnetz (PSTN) oder ein diensteintegrierendes digitales öffentliches Kommunikationsnetz (ISDN) dar. Für die Koordinierung und Überwachung der vermittlungstechnischen Ressourcen im Kommunikationssystem LE ist wiederum eine zentrale Steuerung STE vorgesehen.

Die für das erfindungsgemäße Verfahren wesentlichen Verbindungs-Aktivitäten a eines mobilen Kommunikationsendgerätes KE sind durch Schicht-3-Meldungen repräsentiert. Diese sind insbesondere Verbindungsaufbau- und -abbau-Meldungen ci, "location registration"-Meldungen le sowie Authentisierungsmeldungen am. Diese Meldungen ci, le, am werden jeweils vom Kommunikationssystem LE oder von den Kommunikationsendgeräten KE über das Zubringernetz übermittelt. Gegebenenfalls ist aus übertragungstechnischen Gründen eine Protokollanpassung erforderlich.

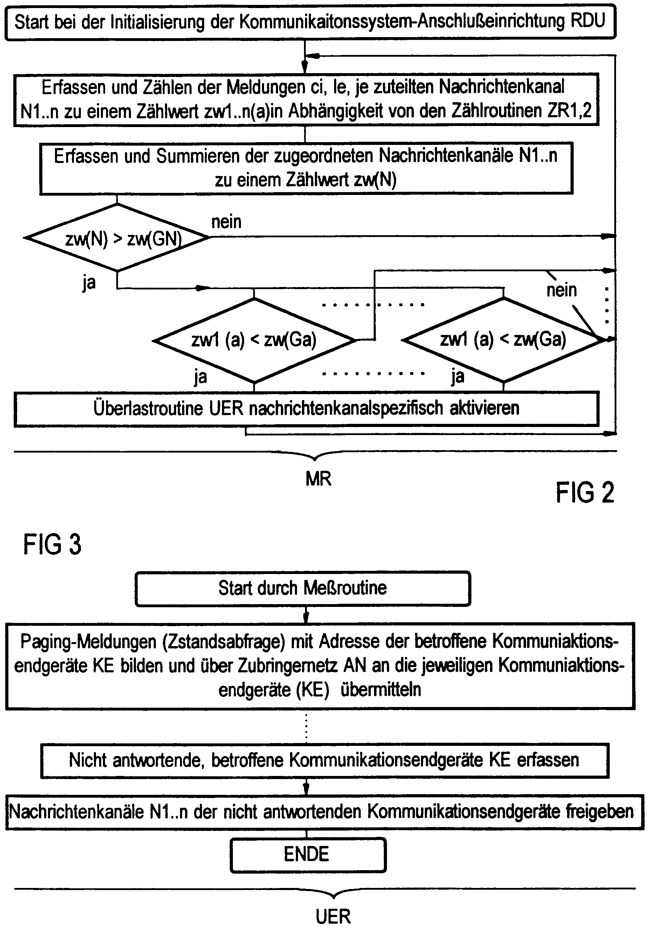

FIG 2 und 3 zeigen anhand zweier Ablaufdiagramme die erfindungsgemäße Meß- und Überlastroutine UER, MR. Die im wesentlichen sich selbst erläuternden Ablaufdiagramme setzen jeweils Erfassungsmittel in der Kommunikationssystem-Anschlußeinrichtung RDU voraus, mit deren Hilfe belegte Nachrichtenkanäle N1..n sowie die vorhergehend beschriebenen Aktivierungen a, d.h. die Verbindungsauf- und -abbau-Meldungen ci, die "location registration"-Meldungen le und die Authentisierungsmeldungen am erfaßt werden können. Diese Erfassungsmittel sind programmtechnisch realisiert, da die zu erfassenden Schicht-3-Meldungen ci, le, am programmtechnisch verarbeitet bzw. angepaßt werden. Die in der FIG 2 angegebenen Zählgrenzewerte zw(GN),zw(Ga) repräsentieren die vorgegebene Anzahl von Nachrichtenkanälen zw(GN) und die vorgegebene Anzahl von Aktivitäten zw(Ga), wobei der die vorgegebene Anzahl zw(GN) von Nachrichtenkanälen N1..n repräsentierende Zählgrenzwert beispielweise 80% Belegung der vorhandenen Nachrichtenkanäle N1..n. repräsentiert.

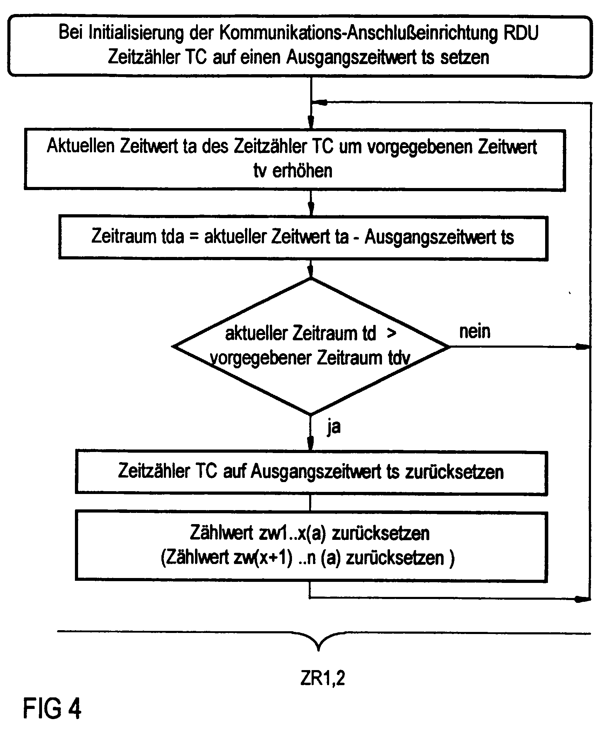

FIG 4 zeigt anhand eines weiteren, im wesentlichen sich selbst eräuternden Ablaufdiagrammes die erfindungsgemäßen, gleichartig realisierten Zeitzähler-Aktivierungsroutinen ZR1,2, wobei in FIG 4 lediglich eine Zeitaktualisierungsroutine ZR1,2 dargestellt ist. Bei der Initialisierung der Kommunikationssystem-Anschlußeinrichtung RDU wird ein programmtechnisch realisierter Zeitzähler TC auf einen Ausgangszeitwert ts, beispielsweise 0 gesetzt. Der aktuelle Zeitwert ta des Zeitzählers TC wird kontinuierlich um einen vorgegebenen Zeitwert tv - beispielsweise fünf Minuten - erhöht. Durch die Differenzbildung des Ausgangszeitwert ts und des aktuellen Zeitwertes ta wird der aktuelle Zeitraum tda bestimmt, der seit dem Ausgangszeitwert ts abgelaufen ist. Übersteigt der nach jedem Erhöhen des Zeitwertes ta des Zeitzählers TC bestimmte Zeitraum tda einen vorgegebenen Zeitraum tdv - beispielsweise ein oder mehrere Stunden -, so werden sowohl der Zeitzähler TC als auch die die aktuell gezählten Aktivitäten (a) repräsentierenden Zählwerte zw1..x(a),zw(x+1) zurückgesetzt - beispielsweise auf den Wert 0. Beim Ausführungsbeispiel sind zwei Zeitzähler-Aktualisierungsroutinen ZR1,2 vorgesehen, wobei die beiden Zeitzähler-Aktualisierungsroutinen ZR1,2 derart zeitlich gesteuert werden, das die Zurücksetzung abwechselnd annähernd zur Hälfte des jeweils vorgegebenen Zeitraums tdv erfolgt. Bei zwei Zeitzähler-Aktualisierungsroutinen ZR1,2 werden die Nachrichtenkanäle N1..n bzw. die diesen zugeordneten Zählern zur Zählung der Aktivitäten (a) jeweils annähernd zur Hälfte zugeordnet. Somit liegen zwei Gruppen von Zählwerten zw1..x(A) und zw(x+1)..n vor. Bei mehreren Zeitzähler-Aktualisierungsroutinen - nicht dargestellt - werden diese mehreren Gruppen von Nachrichtenkanäle N1..n bzw. von diesen zugeordneten Zählern zur Zählung der Aktivitäten (a) zugeordnet, wobei deren Rücksetzen annähernd in zyklisch nacheinander folgenden, gleichen Zeitabständen erfolgt.

## Patentansprüche

1. Verfahren zum Management von Nachrichtenkanälen (N1..n) zwischen einem Kommunikationssystem (LE) und einem Zubringernetz (AN), über das mobile Kommunikationsendgeräte (KE) an das Kommunikationssystem (LE) angeschlossen sind, wobei bei einer Aktivitierung eines mobilen Kommunikationsendgerätes (KE) in den Betriebszustand zumindest einer der Nachrichtenkanäle (N1..n) zugeteilt wird,
- bei dem die Anzahl von Verbindungs-Aktivitäten (a) derjenigen Kommunikationsendgeräte (KE) gemessen wird, für die zumindest ein Nachrichtenkanal (N1..n) zugeteilt ist,
- bei dem bei Überschreiten einer vorgegebenen Anzahl (zw(GN)) von zugeteilten Nachrichtenkanälen (N1..n) durch das Zubringernetz (AN) eine Zustandsabfrage (p) derjenigen mobilen Kommunikationsendgeräte (KE) durchgeführt wird, bei denen die Anzahl der gemessenen Verbindungs-Aktivitäten (a) innerhalb eines vorgegebenen Zeitraums (tdv) eine vorgegebene Anzahl (zw(Ga)) von Verbindungs-Aktivitäten (a) unterschreitet, und
- bei dem bei einem eine Deaktivierung des Betriebszustandes des jeweiligen mobilen Kommunikationsendgerätes (KE) anzeigenden Abfrageergebnis der jeweiligs zumindest eine zugeteilte Nachrichtenkanal (N1..n) freigegeben wird.

2. Verfahren nach Anspruch 1, **dadurch gekennzeichnet,** daß vermittlungstechnische Schicht-3-Aktivitäten (a) gemessen werden.

3. Verfahren nach Anspruch 1 oder 2, **dadurch gekennzeichnet,** daß Verbindungs-Aktivitäten (a) des jeweiligen mobilen Kommunikationsendgerätes (KE) durch
- Meldungen (ci) von abgehenden und ankommenden Anrufen und/oder
- weiterzuleitenden "Location registration"-Meldungen (le) und/oder
- Authentisierungs-Meldungen (am) repräsentiert sind.

4. Verfahren nach einem der Ansprüche 1 bis 3, **dadurch gekennzeichnet,**
- daß für jeden Übertragungskanal (N1..n) die Verbindungs-Aktivitäten (a) mit Hilfe von Zählern gezählt werden,
- daß jeweils für einen vorgegebenen Zeitraum (tdv) ein die gemessene Anzahl von Verbindungs-Aktivitäten (a) repräsentierender Zählwert (zw1..n (a)) gebildet und mit einem vorgegebenen, die vorgegebene Anzahl von Verbindungs-Aktivitäten (a) repräsentierenden Vergleichs-Zählwert /zw(Ga)) verglichen wird, und
- daß das Vergleichsergebnis eine das Unterschreiten oder Überschreiten der vorgegebenen Anzahl von Verbindungs-Aktivitäten (a) anzeigt.

5. Verfahren nach Anspruch 4, dadurch gekennzeichnet,
- daß mit Hilfe von Zeitzählern (TC1,2), wobei die Zeitzähler (TC1,2) jeweils einem Teil der Nachrichtenkanäle (N1..x, (x+1..n) zugeordnet sind, jeweils ausgehend von einem Ausgangszeitwert (ts) kontinuierlich Zeitwerte (ta) gebildet und mit Hilfe des Ausgangszeitwertes (ts) der aktuelle Zeitraum (td) ermittelt und mit einem vorgegebenen Zeitraum (tdv) verglichen wird, und
- daß bei Überschreiten des vorgegebenen Zeitraums (tdv) der jeweilige Zeitzähler (TC) auf den Ausgangszeitwert (ts) und die jeweiligen, die Anzahl der Verbindungs-Aktivitäten repräsentierenden Zählwerte (zw1..x(a), zw(x+1)..n) der zugeordnete Teil der Nachrichtenkanäle (N1..n) rückgesetzt werden, wobei die Zeitzähler (TC) derart gesteuert werden, daß deren Rücksetzen in annähernd gleichen, zyklisch nacheinander folgenden Zeitabständen erfolgt.

6. Verfahren nach einem der vorgehenden Ansprüche, **dadurch gekennzeichnet,** daß ein Nachrichtenkanal (N1..n) eine Bitrate von 64 kit/s oder m x 64 kbit/s oder 64/2ⁱ kbit/s (i = 0,1..4) aufweist.

7. Verfahren nach Anspruch 5, **dadurch gekennzeichnet,** daß mehrere Nachrichtenkanäle (N1..n) zu einem Nachrichtenstrom multiplext und zwischen Zubringernetz (AN) und Kommunikationssystem (KS) übertragen werden.

8. Verfahren nach Anspruch 5 oder 6, **dadurch gekennzeichnet,** daß die Nachrichtenkanäle (N1..Nn) gemäß einer standartisierten Schnittstelle V.5 realsiert sind.
